# EUROPEAN PATENT SPECIFICATION

(11) **EP 3 870 398 B1**
(45) Date of publication and mention of the grant of the patent: **15.05.2024**
(21) Application number: 19790854.4
(22) Date of filing: 17.10.2019
(51) Int. Cl.: B05D 5/00, B24B 49/12, B24B 49/00, B24B 49/16, B24B 27/00, B24D 9/00, B24B 19/26, B24B 21/00, B24B 27/033, B24B 29/00, B24B 51/00

(54) **INDIRECT FORCE CONTROL SYSTEMS AND METHODS USED IN ROBOTIC PAINT REPAIR**
INDIREKTE KRAFTSTEUERUNGSSYSTEME UND VERFAHREN FÜR ROBOTISCHE LACKREPARATUR
SYSTÈMES ET PROCÉDÉS DE COMMANDE DE FORCE INDIRECTE UTILISÉS DANS LA RÉPARATION DE PEINTURE ROBOTIQUE

(30) Priority: 25.10.2018 US 201862750521 P
(43) Date of publication of application: 01.09.2021
(73) Proprietor: 3M Innovative Properties Company, Saint Paul, Minnesota 55133-3427 (US)
(72) Inventor: HEMES, Brett R., Saint Paul, Minnesota 55133-3427 (US); HENDERSON, John W., Saint Paul, Minnesota 55133-3427 (US); SCHMIDT, John J., Saint Paul, Minnesota 55133-3427 (US)
(74) Representative: De Clercq & Partners
(86) International application number: PCT/IB2019/058865
(87) International publication number: WO 2020/084411

(56) References cited:
- DE-U1-202013 101 858
- US-A1- 2009 186 556
- US-A1- 2014 154 954

## Description

### TECHNICAL FIELD

This disclosure relates to abrading tools and consumable abrasive products, and more particularly, to robotically implemented repairs using abrading tools and consumable abrasive products. Such a system is disclosed for example in US 2014/154954 A1, which discloses a robotic paint repair system, comprising; a tool configured to drive the abrasive product to abrade;a robotic device configured to manipulate the tool;a pressure regulating apparatus mountable to the robotic device and configured to apply a desired pressure to the abrasive product; a sensor configured to measure the applied force between the polisher and the workpiece; and a pressure controller configured to control the pressure regulating apparatus to apply the desired pressure based on a measured force of the polisher against the workpiece.

### BACKGROUND

Abrading tools and associated consumable abrasive products are used in numerous industries. For example, consumable abrasive products are used in the woodworking industries, marine industries, automotive industries, construction industries, and so on. Common abrading tools include orbital sanders, random orbital sanders, belt sanders, angle grinders, die grinders, and other tools for abrading surfaces. Consumable abrasive products can include sanding disks, sanding belts, grinding wheels, burrs, wire wheels, polishing discs/belts, deburring wheels, convolute wheels, unitized wheels, flap discs, flap wheels, cut-off wheels, and other products for physically abrading workpieces. Consumable abrasive products are consumable in the sense that they can be consumed and replaced much more frequently than the abrading tools with which they are used. For instance, a grinding wheel for an angle grinder can only last for a few days of work before needing to be replaced, but the angle grinder itself can last many years.

In the automotive industry, defect-specific repairs for paint applications (e.g., primer sanding, clear coat defect removal, clear coat polishing, etc.) are utilized using abrading tools and associated consumable abrasive products. Clear coat repair is one of the last operations to be automated in the automotive original equipment manufacturing (OEM) sector. Techniques are desired for automating this process as well as other paint applications (e.g., primer sanding, clear coat defect removal, clear coat polishing, etc.) amenable to the use of abrasives and/or robotic inspection and repair. Additionally, this problem has not been solved in the aftermarket sector.

To date, defect-specific repairs for paint applications in the automotive industry remains completely manual.

### SUMMARY

This disclosure describes systems, methods and techniques related to various problems in automating defect-specific repairs for paint applications. For example, robotic paint repair (material removal and subsequent polishing) is not trivial to automate with the key issue being that both process actions are inherently force-dependent. That is, they require precise applied forces during processing to obtain optimal (or even sufficient) results. Robotic manipulators, due to their historical drive to ever increased precision, are inherently stiff systems that, by themselves, cannot produce significant force control fidelity. With the addition of some advanced force sensing and reactive control loops / algorithms it is possible to have the robot manipulators apply controlled forces to the workpiece but the systems in general still suffer from high stiffness (i.e., small positional displacements result in large changes of joint torques and thus large forces at the end effector). As a solution to the above, the current state-of-the art consists of attaching softer redundant actuation between the robot and the tool. This added compliance smooths out the force-displacement curves and results in systems that can precisely control applied forces over a particular displacement.

Traditional robotic systems in the abrasives field utilize sensors that measure properties and conditions that can vary, and thus, are not ideal for rapid control response. For example, a motor of an abrading tool must overcome friction between abrasive and substrate. Friction changes based on coarseness of the abrasive, coarseness of the substrate, size of the abrasive disc, applied force, abrasive loading, lubrication, etc. result in varying pattern of the abrasive on the substrate. With this in mind, the present inventors have recognized herein systems, methods and techniques that represent improvements on the current state of the art in that they can gather data from passive components (e.g., a backup pad or substrate) that are not friction dependent. The present inventors recognize that useful data regarding operating feedback includes measurement of the rotational velocity of a component (e.g., the backup pad) that has a passive degree of freedom in the abrading system. Thus, the inventors propose various systems for passively determining rotational velocity and other operational criteria. According to one example, the backup pad can be marked with aliasing marks having a known orientation and distribution (sometimes referred to as a target displacement herein). The method utilized by the inventors can use the rotational velocity of the backup pad (determined via a tachometer) as an input to a pressure controller, in one example. Thus, the present inventors have systems, methods and techniques where backup pad rotational velocity is used to control force, pressure and other operating properties of the robotic device. This control schema operates in process-native space that results in a more natural control law and better performance over a wide range of abrasive-substrate combinations without requiring any a priori process expertise/knowledge/tuning. Put another way, the inventors have developed an universal approach for controlling force that works for any abrasive-substrate combination and has wider process windows (e.g., the force control is more resilient to operating factors such as the presence of applied water, etc.). In summary, the systems, methods and techniques of the present disclosure removes the requirement of having direct force control. Thus, the systems, methods and techniques do not require any direct force measurement (via load cell) and can also improve on existing open-loop feed-forward approaches by being independent of any system slop and or friction (thus does not require periodic calibration based on tool age or wear). The end result is a significantly cheaper and more robust methodology.

Backup pad velocity can be measured in a number of ways depending on the type of tool used. According to one example, a tachometer and markings on the backup pad as previously discussed can be used. In another example, with a rotary electric servo motor tool the RPM can be measured directly via encoders or indirectly through control signals. With air tools RPM is much more sensitive to air supply and load. In these cases, optical measurement via tachometers can be implemented.

According to other examples, the inventors propose novel methods for sufficiently linear processing motions, it is possible to apply the techniques discussed above but using the swarf pattern (vs backup pad rotational velocity) to drive force/pressure setpoints. In particular, camera images can be taken of swarf patterns and these can be used to adjust control inputs as necessary to change swarf pattern. Image processing supporting these control techniques can be achieved by any high-speed image processing methods (e.g., neural networks).

Knowing RPM and/or other passively sensed properties the inventors can use them for force/pressure control of the robotic device and other purposes. The measured properties can also be used for machine learning and/or in other algorithms for useful purposes (e.g., improved robotic control, improved repair results, etc.).

The details of one or more examples of the disclosure are set forth in the accompanying drawings and the description below. Other features, objects, and advantages of the disclosure will be apparent from the description, drawings, and claims.

The disclosure herein includes but is not limited to the following illustrative Examples:
Example 1 is a system for robotic paint repair that can include a consumable abrasive product configured to abrade a substrate, a tool configured to drive the consumable abrasive product to abrade, a backup pad configured to couple with the consumable abrasive product, a robotic device configured to manipulate the tool, a pressure regulating apparatus mountable to the robotic device and configured to apply a desired pressure to the consumable abrasive product, a sensor configured to measure at least one of a rotational velocity of the backup pad or a debris pattern from the substrate that results from abrading, and a pressure controller configured to control the pressure regulating apparatus to apply the desired pressure based upon the at least one of the measured rotational velocity of the backup pad or the measured debris pattern.
Example 2 is the system of Example 1, wherein the sensor can comprise one or more of a tachometer, an encoder, a high speed camera, an accelerometer, a gyroscope, a force transducer, and a torque transducer.
Example 3 is the system of Example 2, wherein the sensor can comprise a tachometer and the backup pad includes a plurality of visual indicia on a periphery of the backup pad.
Example 4 is the system of Example 3, wherein the visual indicia can comprise a plurality of spaced apart lines at predetermined increments around the periphery of the backup pad.
Example 5 is the system of any one or combination of Examples 1-4, wherein the sensor can comprise a force transducer and at least one of the backup pad and the consumable abrasive product is arranged with a center of mass that is off-axis.
Example 6 is the system of any one or combination of Examples 1-5, wherein the sensor can be configured to measure the spatial frequency of the debris pattern.
Example 7 is the system of any one or combination of Examples 1-6, wherein the sensor can be configured to measure intensity differences within the debris pattern.
Example 8 is the system of any one or combination of Examples 1-7, further comprising a robotic controller configured to change an operation or a parameter related to manipulation of the tool stack by the robotic device based on data derived from the measured one of the rotational velocity of the backup pad or the debris pattern from the substrate that results from abrading.
Example 9 is a method of abrading a substrate to perform a repair that can comprising: providing a robotic device coupled to a tool stack including a tool, a backup pad and a consumable abrasive product, manipulating the robotic device to move the tool stack to abrade the substrate with the consumable abrasive product; and controlling a pressure applied to the consumable abrasive product from the robotic device based on at least one of a rotational velocity of the backup pad, vibrational response of the tool stack and an observed debris pattern.
Example 10 is the method of abrading of Example 9, wherein the rotational velocity of the backup pad can be one of a sensed rotational velocity or a derived rotational velocity.
Example 11 is the method of any one or combination of Examples 9-10, wherein the rotational velocity of the backup pad can be measured by a tachometer that observers a plurality of visual indicia on a periphery of the backup pad.
Example 12 is the method of any one or combination of Examples 9-11, and optionally further comprising changing an operation or a parameter related to manipulation of the tool stack by the robotic device based on data derived from the at least one of the rotational velocity of the backup pad and the debris pattern from the substrate that results from abrading.
Example 13 is the method of any one or combination of Examples 9-12, wherein controlling the pressure applied can include measuring a beating signal with a force transducer within the tool stack to determine a vibrational response of the tool stack.
Example 14 is the method of Example 1, wherein the beating signal can result from an off-axis center of mass of at least one component of the tool stack.
Example 15 is the method of any one or combination of Examples 9-14, wherein the observed debris pattern can be a measurement of a spatial frequency of the debris pattern.
Example 16 is the method of any one or combination of Examples 9-15, wherein the observed debris pattern can be an intensity of differences in the debris pattern.

### BRIEF DESCRIPTION OF DRAWINGS

FIG. 1 is a schematic diagram illustrating an example system for robotic paint repair using a tachometer to determine a rotational velocity of a backup pad in accordance with one example of the present application.
FIG. 2 is a schematic diagram of a control loop for backup pad based compliant force control of the system of FIG. 1, in accordance with one example of the present application.
FIG. 3 is a schematic diagram illustrating another example system for robotic paint repair that utilizes one or more sensors in the backup pad and/or abrading tool in accordance with one example of the present application.
FIG. 4 is a schematic diagram illustrating yet another example system for robotic paint repair utilizing swarf pattern in accordance with one example of the present application.
FIG. 5 shows an exemplary swarf pattern, in accordance with one example of the present application.
FIG. 6 is a schematic diagram of a control loop for swarf pattern based compliant force control of the system of FIG. 4, in accordance with one example of the present application.
FIG. 7 is a schematic of a system for monitoring/controlling one or more of the robot, the abrading tool, the consumable abrasive product and the workpiece, the system including a learning component and cloud-based process planning and optimization, in accordance with one example of the present application.

### DETAILED DESCRIPTION

Abrading tools and associated consumable abrasive products present various challenges for individuals and organizations. In one example, over time workers frequently develop an intuitive sense of when a workpiece is of desired quality or when a consumable abrasive product is wearing out. However, a robot using an abrading tool may not acquire such an intuitive sense. Various techniques, systems and methods are disclosed herein to more accurately control robot manipulation of the abrading tool to achieve more desirable results (i.e., more accurate and desirable abrading of substrate to remove paint in one example).

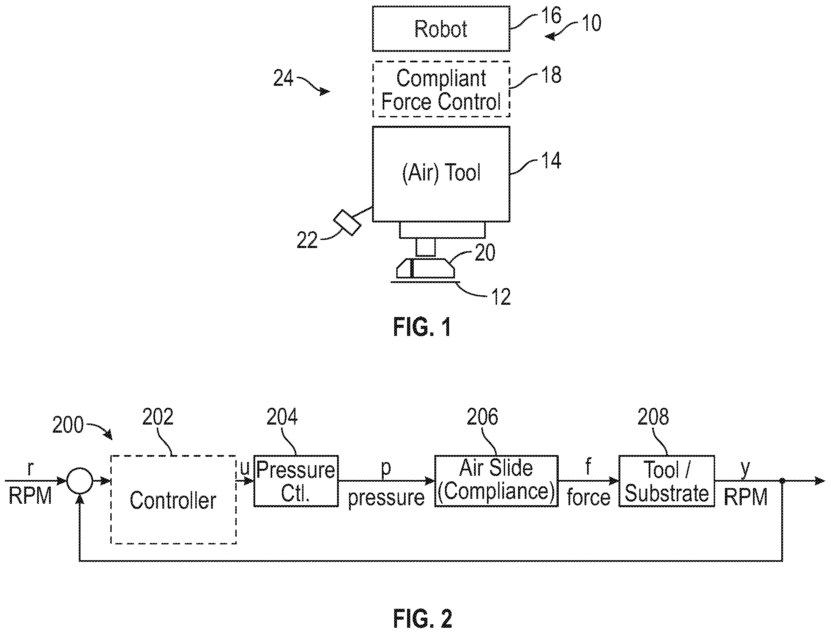

It should be understood that although an illustrative implementation of one or more embodiments are provided below, the disclosed systems and/or methods described with respect to FIGS. 1-7 may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

According to one aspect of this disclosure, a system is disclosed that includes passively derived data regarding operation of a tool stack as manipulated by a robotic device. Such data can be indicative of operational criteria (velocity, force, pressure, etc.) of components such as an abrading tool, backup pad and/or consumable abrasive product (CAP). According to one example as described herein, data gathered by the passive techniques regarding the tool stack or from adjacent the tool stack (e.g. by visual inspection and/or from sensor(s) on the substrate and/or robot) can be utilized for control of the robotic device and automating the process of repairing defects for paint applications using automated abrasive processing and subsequent polishing. The disclosed techniques, systems and methods can include novel combinations of robotic methodology, tools, sensing techniques, stochastic process policy that results in desired system behavior based on current part/system state and provided feedback, and an optional learning component capable of optimizing provided process policy, continuously adapting the policy due to customer's upstream process variations, and/or learning the process policy from scratch with little-to-no human intervention. Although described in reference to repairing defects for paint applications the techniques, methods and systems disclosed can be utilized in other abrading applications.

According to one aspect of the present application, the system includes a computing system that is configured to: receive data from a communication unit regarding a property that is measured on passive component or derived indirectly from other data, the data can be indicative of at least one operating parameter of the tool stack (i.e. of the backup pad such as RPM). The system can use the data for control/feedback to guide manipulation of the tool stack by the robot.

FIG. 1 is a highly schematic diagram of a system 10 that can be used for robotic paint repair. The system 10 can include a consumable abrasive product 12, an abrading tool 14, a robotic device 16, a compliant force control 18, a backup pad 20 and a tachometer 22. As used herein the consumable abrasive product 12, the abrading tool 14, the compliant force control 18 and the backup pad 20 can comprise a tool stack 24. The tool stack 24 is more or less synonymous with the term end effector; however, in this document the term "stack" is the end effector in the context of robotic paint repair. Also, though described for providing robotic paint repair, which includes repair of primer, paint, and clear coats, it will be appreciated that the techniques described herein lend themselves to other industrial applications beyond paint repair.

The consumable abrasive product 12 can be configured to abrade a substrate (not shown). As discussed, in one application of the system 10 can be for defect-specific repairs for paint applications (e.g., primer sanding, clear coat defect removal, clear coat polishing, etc.). Thus, the consumable abrasive product 12 can be configured for this sanding and buffing applications. The tool 14 can be coupled to and configured to drive the consumable abrasive product 12 to abrade the substrate. The robotic device 16 can be coupled to and configured to manipulate the tool 14. Thus, the robotic device 16 can move the tool 14 within a three dimensional spaced as desired while the tool 14 is operable to drive the consumable abrasive product 12 to abrade. The compliant force control can be mechanically and electrically coupled to components of the tool stack 24 and can be a part thereof. In the example of FIG. 1, the compliant force control 18 can be coupled to the tool 14 at one end and to the robotic device 16 at another end.

According to the example of FIG. 1, the compliant force control 18 can be a flange or another physical component of the tool stack 24. The compliant force control 18 can be configured to measure an implementation force via use of the tachometer 22 and marking(s) 21 on the backup pad 20 as will be further discussed herein. The compliant force control 18 can further measure other implementation force such as that of the robotic device 16 and can be configured to control manipulation of the robotic device and/or other operational criteria of the tool stack based upon the implementation force. This can result in an altered stiffness for the tool stack 24 due to changes in the force/pressure applied to components thereof (most notably the consumable abrasive product 12) due to the compliant force control 18. The compliant force control 18 can further include various types of feedback including force and/or torque sensing. These measurements can be used as feedback to control desired forces or for measuring (directional) vibrations in the system.

The tachometer 22 can be part of the tool stack 24 or can be mounted adjacent thereto. The tachometer 22 can be positioned to have visibility to portions of the backup pad 20 such as the sides thereof that can have the marking(s) 21. However, other locations for the tachometer 22 and marking(s) 21 are contemplated and can be on the abrading tool 14, the consumable abrasive product 12, etc. in other examples.

The backup pad 20 can be positioned between the consumable abrasive product and the tool 14, for example. The backup pad 20 can be coupled with the consumable abrasive product 12. According to one example, the backup pad 20 can have outer layer(s) with natural rubber or synthetic rubber (for example, urethane rubber or chloroprene rubber) as a main raw material. The backup pad 20 can have an inner layer that can be, for example, a foam body obtained from natural rubber or synthetic rubber. The foam body can be a closed cell foam or an open cell foam. Alternatively, the main raw material of the inner layer may be natural rubber or synthetic rubber.

As briefly discussed above and now shown specifically with respect to FIG. 2, the complaint force control 18 can rely on the counted RPM of the backup pad 20 as determined with the tachometer 22 and the marking(s) 21 as input. The input can be used as feedback to actuate the complaint force control 18 to control implementation force. For example, if the compliant force control 18 can utilize the input RPM and can be actuated (using pneumatics, servo electric etc.) to alter force from the robotic device 16 so as to apply a desired force and desired stiffness to the consumable abrasive product 12 based on the RPM. In this manner, undesired amounts of force/pressure etc. such as the implementation force of the robotic device 16 (if to high) that can result from undesirable manipulation of the robotic device 16 can be avoided from transfer to the consumable abrasive product 12 (and hence the substrate) by use of the complaint force control 18.

This process is illustrated in the control system 200 of FIG. 2, where RPM as counted by the tachometer 22 from the marking(s) 21 is used as feedback in a control loop, in particular, as input to a controller 202. This controller 202 can communicate electronically with a pressure controller 204 (part of the complaint force control 18 for example). The pressure controller 204 can control a pressure and force applied to the tool stack 208 via an air slide 206 or another type of compliance device that is known in the art such as air bladders, spring-damper systems, linear servo motors, or the like. The RPM of the tool stack 208 (such as from the backup pad as previously described) can be continuously measured and used as a feedback for the control system 200. If RPM changes the control system 200 via the controller 202 can change pressure, force and other operational criteria in response. According to further examples, various types of feedback including force and/or torque sensing are contemplated. These measurements can be used as feedback to control desired forces or for measuring (directional) vibrations in the system. Using the force and/or torque data one can measure vibration to infer RPM and/or other performance related criteria.

The desired force can comprise a range, a target, a maximum value, a minimum value, for example. The desired stiffness can comprise one or more of an angular stiffness and a lateral stiffness, for example.

In the manual clear-coat repair process, at a high-level, is well known and accepted in the industry. It is a two-step process: abrasion/sanding and polishing/buffing. From an automation perspective, the following inputs and outputs may be of relevance in different embodiments (with examples from the 3M Finesse-it system):
Inputs:
   Shared (sanding and polishing)
      Tool speed [frequency]
      Backup pad speed [frequency]
      Tool orbit [length]
      Randomness (i.e., random orbital vs. orbital)
      Path pattern
      Path speed [velocity]
      Applied force/pressure
      Angle (*i.e.,* off normal)
      Total process time
   Sanding-specific
      Backup pad
         Hardness
      Abrasive Disc
         Product
            *e.g*., {468LA, 366LA, 464LA, 466LA}
         Grade
            *e.g.,* {A3, A5, A7}
         Diameter / Scallop
            *e.g.,* {1-1/4", 1-3/8" scalloped}
         State
            Age (*e.g., age* ≈ *f*(*pressure, time*))
            Cleanliness (e.g., has the disc been cleaned?)
   Polishing-specific
      Buffing pad
         Foam
            *e.g.,* {Gray, Orange, Red, Green, White}
         Diameter
            *e.g.,* {3-1/4", 3-3/4", 5-1/4"}
         Surface profile
            *e.g.,* {flat, egg crate}
      Polish
         Amount
         Distribution
         Finish
            *e.g.,* {FM, P, EF, K211, FF, UF}
Outputs:
   Uniformity
   Roughness
   Gloss percentage
   Time to buff
   Final buff quality (*e.g.,* uniformity, haze, *etc*.)

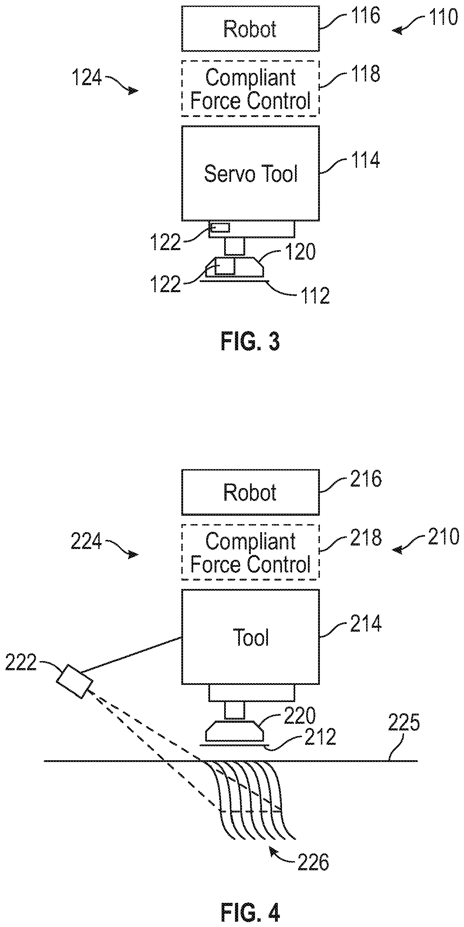

FIG. 3 is a highly schematic diagram of another system 110 that can be used for robotic paint repair. The system 110 can include a consumable abrasive product 112, an abrading tool 114, a robotic device 116, a compliant force control 118, a backup pad 120 such as those previously described in reference to FIG. 1. However, rather than using the tachometer 22, the system 110 uses sensor(s) 122. The consumable abrasive product 112, the abrading tool 114, the compliant force control 118 and the backup pad 120 can comprise a tool stack 124.

In the example of FIG. 3, the tool 116 can comprise a rotary electric servo motor powered tool. Thus, the RPM can be measured directly via sensor(s) 122 such as encoder(s) accelerometer(s), gyroscope(s), force transducer(s),torque transducer(s) and/or another MEMS device(s) within the tool 114 and/or on the backup pad 120. According to one example, the sensor(s) 122 can comprise a force transducer and the backup pad 120 and/or consumable abrasive product 112 can have an off-axis center of mass. This construct for the force transducer with the backup pad 120 and/or consumable abrasive product 112 will result in a "beating" signal at the force transducer such that RPM of the backup pad 120 and/or consumable abrasive product 112 can be inferred from collected data.

According to further examples, the RPM can be derived indirectly through control signals rather than using sensor(s) 122. Using the force/torque sensing derived from the sensor(s) such as from the accelerometer(s), gyroscope(s), force transducer(s) and/or torque transducer(s) one can measure vibration to infer RPM and/or other performance related criteria.

FIG. 4 shows yet another system 210 that can be used for robotic paint repair. The system 210 can include a consumable abrasive product 212, an abrading tool 214, a robotic device 216, a compliant force control 218, a backup pad 220 such as those previously described in reference to FIGS 1 and 3. However, rather than using the tachometer 22 or encoder(s) 122, the system 210 utilizes a camera 222 or other type of optical device. For reference, the consumable abrasive product 212, the abrading tool 214, the compliant force control 218 and the backup pad 220 can comprise a tool stack 224 as previously defined.

FIG. 4 shows the substrate 225 with a swarf (debris) pattern 226 thereon. The characteristics of this swarf pattern 226 can be captured by the camera 222 as shown in FIG. 4. The camera 222 can be configured to measure intensity differences within the debris pattern 226 according to some examples. In further examples, the cameral 222 can be configured to measure a spatial frequency of the debris pattern 226.

By applying the techniques discussed above but using the swarf pattern (vs backup pad rotational velocity), swarf patterns indicative of RPM and other operational criteria as discussed further below of the tool stack 224 can be used as input to drive force/pressure setpoints as described in FIGS. 1 and 2. In particular, camera images can be taken of swarf patterns and these can be used to adjust control inputs as necessary to change swarf pattern. Image processing supporting these control techniques can be achieved by any high-speed image processing methods (e.g., neural networks).

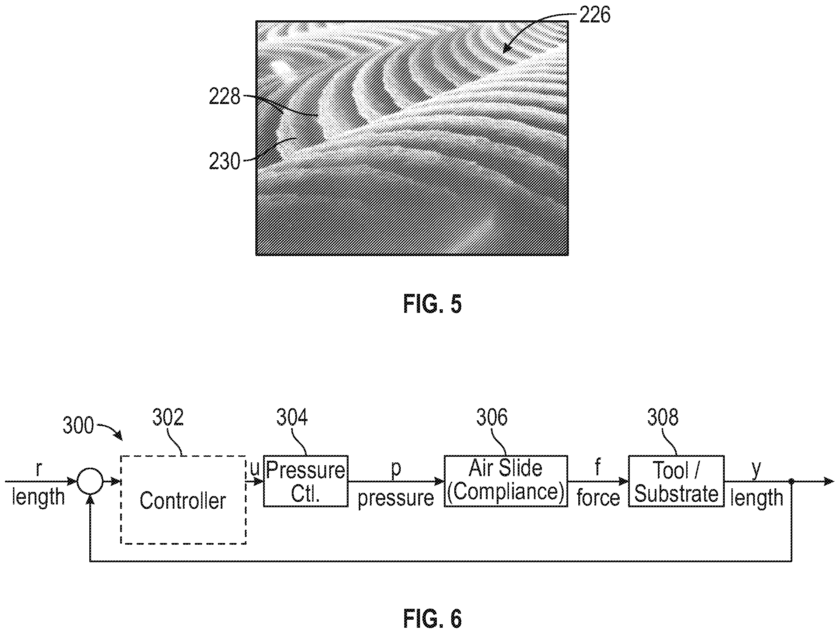

FIG. 5 show one example of the swarf pattern 226 that includes peaks 228 and valleys 230 arranged in distinct special frequency. A distance y of this spatial frequency (here measured between the peaks 228) is a function of tool velocity, applied pressure, and RPM of the backup pad. While processing, the tool velocity and applied pressure are controllable via the robotic system, thus the RPM of the backup pad and ultimate performance of the system and be controlled by changing the applied pressure and/or tool velocity during processing

A control process is illustrated in the control system 300 of FIG. 6, where swarf pattern, in particular, distance between peaks (y distance) is used and input to a controller 302. This controller 302 can communicate electronically with a pressure controller 304 (part of the complaint force control 218 for example). The pressure controller 304 can control a pressure and force applied to the substrate 308 via an air slide 306 or another type of compliance device that is known in the art. The swarf pattern of the substrate 208 (such as previously described) can be continuously, monitored measured and used as a feedback for the control system 300. If swarf pattern changes the control system 300 via the controller 302 can change pressure, force and other operational criteria in response.

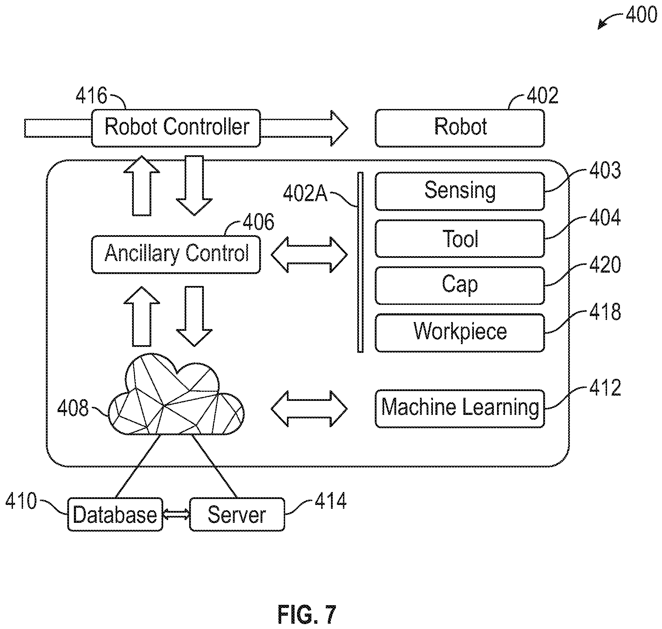

Robots such as robotic device 16, 116, 216 can have difficulty in performing abrading tasks because they lack a human operator's intuitive feel. However, use of robots to perform abrading tasks can be highly beneficial in some situations, such as when toxic materials are involved, space is constrained, physical access to an area of a workpiece is constrained, work occurs in a hazardous area, and so on. In some instances, a computing system can use the data derived from the various sensors and techniques discussed previously in this application for training and improving the operation of robots such as robotic device 16, 116, 216 to perform abrading tasks such as the paint repair previously described. For example, the computing system can aggregate data from many work sessions to quantify what a worker might intuitively feel about an area of a workpiece being complete, applied force/pressure being to little in amount or to large, a CAP being worn out, etc. For instance, the computing system can determine (e.g., based on data gathered from the tool stack as previously discussed and other data such as camera, video or other visual information, work duration information, abrading tool movement information, temperature information, and/or other data) when an area of a workpiece is complete or other information. Similar information can be used for determining whether the CAP is worn out. In some examples, computing system can train a machine learning system (further shown in FIG. 7) based on such data to make determinations regarding whether an area of a workpiece is complete and/or whether the CAP is worn out and other determinations. For instance, usage data such as the data gathered with the techniques and including the sensors discussed herein can be used as training data for a neural network part of a machine learning routine as discussed below in FIG. 7. Furthermore, the data can be used for manufacturer monitoring of the CAP and/or the abrading tool performance for purposes of product improvement.

FIG. 7 shows a sample example of a robotic implemented system 400 including a learning component and cloud-based process planning and optimization. The flow of data is depicted with arrows in FIG. 7. In the example of FIG. 7, the robotic device 402 has been augmented such that the tool stack 402A or work area includes sensors 403 (e.g., the tachometer, encoder(s), camera as previously described). The abrading tool 404 or other components such as the backup pad discussed previously can be implemented with sensors 403, markings, etc. An ancillary control unit 406 is provided as part of the system 400. Furthermore, a cloud computing system 408 including a database 410 that is local or maintained in the cloud computing system 408 and is responsible for executing and maintaining the control policy for the system 400 including the robotic device 402 including those instructions recommended by a machine learning unit 412 and maintained by an instruction server 414 is provided as part of the system 400.

The ancillary control unit 406 can take the place of the deterministic code previously residing in a robot controller or similar device and can provide the immediate real-time signals and processing for execution of the robotic device 402 and/or tool stack 402A. In this regard, the robotic device 402 can now serve a reactionary role in the system 400 driven by the ancillary control unit 406. The database 410 of the cloud computing system 400 can serve as a long-term data repository that stores monitoring generated data of processing including state variables, measurements, and resulting performance that can be correlated with identified operating parameter deviations and/or defects to generate instructions (sometimes termed policies) implemented by the instruction server 414. Additionally, the machine learning unit 412 can be responsible for continuously improving the operating instructions based on observations (state/sensor data derived from monitoring) and subsequent reward (quality of performance). Online learning can be accomplished by a form of reinforcement learning such as Temporal Difference (TD) Learning, Deep Q Learning, Trust Region Policy Optimization, etc.

In the example of FIG. 7, the robot device 402 can be capable of sufficiently positioning the tool stack 402A to achieve desired abrading described above. While lower degree of freedom systems could be used in some cases, six degree of freedom serial robot manipulators can be utilized as well. Some examples include, but are not limited to Fanuc's M-20 series, ABB's IRB 1600, or Kuka's KR 60 series. For example, the Kuka KR 60 HA has 6 axes and degrees of freedom, supports a 60 kg payload, and has a 2.033 m reach. Process-specific tooling has been covered in extensive detail above.

A robot controller module 416 can be the robot OEM provided controller for the robotic device 402. The robot controller module 416 can be responsible for sending motion commands directly to the robotic device 402 and monitoring any operational, safety or other concerns. In practice, the robot controller module 416 can generally include a robot controller in conjunction with one or more safety programmable logic controllers (PLCs) for cell monitoring. In a sample example, the robot controller module 416 can be setup to take input from the ancillary control unit 406 that can provide performance specific information including various of the data (usage, safety, quality, etc.) discussed previously and/or commands. This can happen, depending on the desired implementation, either off-line via program downloads and execution or in real-time via streaming. An example of the offline approach would be a pre-processed robot program in the native robot's language (e.g., RAPID, KRL, Karel, Inform, etc.) that gets run by the robot controller module 416. On the other hand, example streaming interfaces would be through robot OEM provided sensor interface packages such as Fanuc's Dynamic Path Modification package or Kuka's Robot Sensor Interface. In this real-time example, the ancillary controller 406 can (described in further detail below) send on-line, real-time positional offsets to the robot controller module 416 based on gathered data derived from monitoring.

The ancillary control unit 406 can serve as the central communication hub between the smart abrading tool 404, the robotic device 402, other components of the system that can have communication units and/or sensors (e.g., a backup pad as previously discussed and shown, a workpiece 418 and/or a consumable abrasive product (CAP) 420) and the cloud computing system 408. The ancillary control unit 406 can receive monitoring data for the various sensors (from the backup pad, the abrading tool 404, the workpiece 418, the CAP 420 and/or other components of the tool stack 402A) and transmits the resulting policy to the robot controller module 416 as illustrated in FIG. 7 and can control various devices including the backup pad, actuators, valves, other controllers, etc. as previously discussed. As noted above, this transmission can be either online or off-line depending on the particular implementation. The ancillary control unit 406 can be also responsible for controlling any proprietary hardware such as the force control sensors and devices, actuators, air/servo tools, sensors, and the like.

In one example, the ancillary control unit 406 can comprise an embedded (industrially hardened) process PC running a real-time/low-latency Linux kernel. Communication to the robot controller module 416 (via the KUKA. RobotSensorInterface) can be accomplished through UDP protocol. Communication to the various system components can be via the various communication units and modalities discussed previously in reference to FIGURES.

The robotic device 402 can include any process-specific tooling required for the objective such as force control sensors and devices, actuators, valves, other controllers sensors, etc. In general, the robotic device 402 itself may not be dexterous enough or nuanced in force application to adequately apply the correct processing forces. As such, some form of active compliance can often be necessary or desirable. Besides the force control sensors and devices such as those previously described herein, the sensors can also be desirable as in-situ inspection allows for local hi-fidelity measurements such as of a finish on the workpiece 418 at process-time along with the ability to acquire feedback mid-process, which may not be achievable with approaches using only pre-inspection and post-inspection. For example, mid-process feedback from various of the sensor previously described in reference to any of the FIGURES herein can be important to a successful learning algorithm. The sensors 403 can include any of the various sensors previously described and can be mounted on or within the backup pad, the abrading tool 404, the workpiece 418, adjacent the tool stack 402A, and/or the CAP 420. Additionally, the sensors 403 can be placed in close proximity to the workplace to gather operation related data including images of objects/components in the workplace.

It is to be recognized that depending on the example, certain acts or events of any of the techniques described herein can be performed in a different sequence, can be added, merged, or left out altogether (e.g., not all described acts or events are necessary for the practice of the techniques). Moreover, in certain examples, acts or events can be performed concurrently, e.g., through multi-threaded processing, interrupt processing, or multiple processors, rather than sequentially.

In one or more examples, the functions described can be implemented in hardware, software, firmware, or any combination thereof, located locally or remotely. If implemented in software, the functions can be stored on or transmitted over a computer-readable medium as one or more instructions or code and executed by a hardware-based processing unit. Computer-readable media can include computer-readable storage media, which corresponds to a tangible medium such as data storage media, or communication media including any medium that facilitates transfer of a computer program from one place to another, e.g., according to a communication protocol. In this manner, computer-readable media generally can correspond to (1) tangible computer-readable storage media which is non-transitory or (2) a communication medium such as a signal or carrier wave. Data storage media can be any available media that can be accessed by one or more computers or one or more processors to retrieve instructions, code and/or data structures for implementation of the techniques described in this disclosure. A computer program product can include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium.

It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions can be executed by one or more processors, such as one or more digital signal processors (DSPs), general purpose microprocessors, application specific integrated circuits (ASICs), field programmable gate arrays (FPGAs), or other equivalent integrated or discrete logic circuitry, as well as any combination of such components. Accordingly, the term "processor," as used herein can refer to any of the foregoing structures or any other structure suitable for implementation of the techniques described herein. In addition, in some aspects, the functionality described herein can be provided within dedicated hardware and/or software modules. Also, the techniques could be fully implemented in one or more circuits or logic elements.

The techniques of this disclosure can be implemented in a wide variety of devices or apparatuses, including a wireless communication device or wireless handset, a microprocessor, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units can be combined in a hardware unit or provided by a collection of interoperative hardware units, including one or more processors as described above, in conjunction with suitable software and/or firmware.

The functions, techniques or algorithms described herein may be implemented in software in one example. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the examples described are merely examples. The software may be executed on a digital signal processor, ASIC, microprocessor, or other type of processor operating on a computer system, such as a personal computer, server or other computer system, turning such computer system into a specifically programmed machine

Various examples have been described. These and other examples are within the scope of the following claims.

## Claims

1. A robotic paint repair system (10, 110), comprising:
a consumable abrasive product (12) configured to abrade a substrate;
a tool (14) configured to drive the consumable abrasive product (12) to abrade;
a backup pad (20) configured to couple with the consumable abrasive product (12);
a robotic device (16) configured to manipulate the tool (14);
a pressure regulating apparatus mountable to the robotic device (16) and configured to apply a desired pressure to the consumable abrasive product (12);
a sensor (122) configured to measure at least one of a rotational velocity of the backup pad (20) or a debris pattern from the substrate (225) that results from abrading; and
a pressure controller (204, 304) configured to control the pressure regulating apparatus to apply the desired pressure based upon the at least one of the measured rotational velocity of the backup pad (20) or the measured debris pattern.

2. The system (10) of claim 1, wherein the sensor (122) comprises one or more of a tachometer (22), an encoder, a high speed camera, an accelerometer, a gyroscope, a force transducer, and a torque transducer.

3. The system (10) of claim 2, wherein the sensor (122) comprises a tachometer (22) and the backup pad (20) includes a plurality of visual indicia on a periphery of the backup pad (20).

4. The system (10) of claim 3, wherein the visual indicia comprise a plurality of spaced apart lines at predetermined increments around the periphery of the backup pad (20).

5. The system (110) of any one of claims 1-4, wherein the sensor (122) comprises a force transducer and at least one of the backup pad (120) and the consumable abrasive product (112) is arranged with a center of mass that is off-axis.

6. The system (10) of any one of claims 1-5, wherein the sensor (122) is configured to measure the spatial frequency of the debris pattern.

7. The system (10) of any one of claims 1-6, wherein the sensor (122) is configured to measure intensity differences within the debris pattern.

8. The system (10) of any one of claims 1-7, further comprising a robotic controller configured to change an operation or a parameter related to manipulation of the tool stack (24) by the robotic device (16, 116, 216)
based on data derived from the measured one of the rotational velocity of the backup pad (20) or the debris pattern from the substrate that results from abrading.

9. A method of abrading a substrate (225) to perform a repair, comprising:
providing a robotic device (16, 116, 216) coupled to a tool stack (24) including a tool (14), a backup pad (20) and a consumable abrasive product (12);
manipulating the robotic device (16, 116, 216) to move the tool stack (24) to abrade the substrate (225) with the consumable abrasive product (12); and
controlling a pressure applied to the consumable abrasive product (12) from the robotic device (16, 116, 216) based on at least one of a rotational velocity of the backup pad (20), vibrational response of the tool stack (24) and an observed debris pattern

10. The method of abrading of claim 9, wherein the rotational velocity of the backup pad (20) is one of a sensed rotational velocity or a derived rotational velocity.

11. The method of any one of claims 9-10, wherein the rotational velocity of the backup pad (20) is measured by a tachometer (22) that observes a plurality of visual indicia on a periphery of the backup pad (20).

12. The method of any one of claims 9-11, further comprising changing an operation or a parameter related to manipulation of the tool stack (24) by the robotic device based on data derived from the at least one of the rotational velocity of the backup pad (20) and the debris pattern from the substrate that results from abrading.

13. The method of any one of claims 9-12, wherein controlling the pressure applied includes measuring a beating signal with a force transducer within the tool stack (24) to determine a vibrational response of the tool stack (24).

14. The method of claim 13, wherein the beating signal results from an off-axis center of mass of at least one component of the tool stack (24).

15. The method of any one of claims 9-14, wherein the observed debris pattern is a measurement of a spatial frequency of the debris pattern.

16. The method of any one of claims 9-15, wherein the observed debris pattern is an intensity of differences in the debris pattern.

## Patentansprüche

1. Ein robotisches Lackreparatursystem (10, 110), aufweisend:
ein verbrauchbares Schleifprodukt (12), das konfiguriert ist, um ein Substrat abzuschleifen;
ein Werkzeug (14), das konfiguriert ist, um das verbrauchbare Schleifprodukt (12) anzutreiben, um abzuschleifen;
einen Stützteller (20), der konfiguriert ist, um mit dem verbrauchbaren Schleifprodukt (12) gekoppelt zu werden;
eine robotische Vorrichtung (16), die konfiguriert ist, um das Werkzeug (14) zu manipulieren;
eine Druckregulierungseinrichtung, die an der robotischen Vorrichtung (16) montierbar ist und die konfiguriert ist, um einen gewünschten Druck auf das verbrauchbare Schleifprodukt (12) anzuwenden;
einen Sensor (122), der konfiguriert ist, um mindestens eines von einer Drehgeschwindigkeit des Stütztellers (20) oder eines Abriebmusters von dem Substrat (225), das sich aus einem Abschleifen ergibt, zu messen; und
eine Drucksteuerung (204, 304), die konfiguriert ist, um die Druckregulierungseinrichtung zu steuern, um den gewünschten Druck basierend auf der mindestens einen der gemessenen Drehgeschwindigkeit des Stütztellers (20) oder dem gemessenen Abriebmuster anzuwenden.

2. Das System (10) nach Anspruch 1, wobei der Sensor (122) einen oder mehrere eines Drehzahlmessers (22), eines Encoders, einer Hochgeschwindigkeitskamera, eines Beschleunigungsmessers, eines Gyroskops, eines Kraftwandlers und eines Drehmomentwandlers aufweist.

3. Das System (10) nach Anspruch 2, wobei der Sensor (122) einen Drehzahlmesser (22) aufweist und der Stützteller (20) eine Mehrzahl von visuellen Zeichen an einem Umfang des Stütztellers (20) einschließt.

4. Das System (10) nach Anspruch 3, wobei die visuellen Zeichen eine Mehrzahl von beabstandeten Linien in zuvor bestimmten Inkrementen um den Umfang des Stütztellers (20) herum aufweisen.

5. Das System (110) nach einem der Ansprüche 1 bis 4, wobei der Sensor (122) einen Kraftwandler aufweist und mindestens eines des Stütztellers (120) und des verbrauchbaren Schleifprodukts (112) mit einem Massenschwerpunkt, der außeraxial liegt, angeordnet ist.

6. Das System (10) nach einem der Ansprüche 1 bis 5, wobei der Sensor (122) konfiguriert ist, um die räumliche Frequenz des Abriebmusters zu messen.

7. Das System (10) nach einem der Ansprüche 1 bis 6, wobei der Sensor (122) konfiguriert ist, um Intensitätsunterschiede innerhalb des Abriebmusters zu messen.

8. Das System (10) nach einem der Ansprüche 1 bis 7, ferner aufweisend eine robotische Steuerung, die konfiguriert ist, um einen Vorgang oder einen Parameter, der sich auf die Manipulation des Werkzeugstapels (24) bezieht, durch die robotische Vorrichtung (16, 116, 216) zu ändern
basierend auf Daten, die von der gemessenen der Drehgeschwindigkeit des Stütztellers (20) oder dem Abriebmuster von dem Substrat, das sich aus dem Abschleifen ergibt, abgeleitet sind.

9. Ein Verfahren zum Abschleifen eines Substrats (225), um eine Reparatur durchzuführen, aufweisend:
Bereitstellen einer robotischen Vorrichtung (16, 116, 216), die mit einem Werkzeugstapel (24) gekoppelt ist, der ein Werkzeug (14), einen Stützteller (20) und ein verbrauchbares Schleifprodukt (12) einschließt;
Manipulieren der robotischen Vorrichtung (16, 116, 216), um den Werkzeugstapel (24) zu bewegen, um das Substrat (225) mit dem verbrauchbaren Schleifprodukt (12) abzuschleifen; und
Steuern eines Drucks, der auf das verbrauchbare Schleifprodukt (12) von der robotischen Vorrichtung (16, 116, 216) angewendet wird, basierend auf mindestens eines einer Drehgeschwindigkeit des Stütztellers (20), einer Vibrationsantwort des Werkzeugstapels (24) und eines beobachteten Abriebmusters.

10. Das Verfahren zum Abschleifen nach Anspruch 9, wobei die Drehgeschwindigkeit des Stütztellers (20) eine von einer erfassten Drehgeschwindigkeit oder einer abgeleiteten Drehgeschwindigkeit ist.

11. Das Verfahren nach einem der Ansprüche 9 bis 10, wobei die Drehgeschwindigkeit des Stütztellers (20) durch einen Drehzahlmesser (22) gemessen wird, der eine Mehrzahl von visuellen Zeichen auf einem Umfang des Stütztellers (20) beobachtet.

12. Das Verfahren nach einem der Ansprüche 9 bis 11, ferner aufweisend das Ändern eines Vorgangs oder eines Parameters, der sich auf die Manipulation des Werkzeugstapels (24) bezieht, durch die robotische Vorrichtung, basierend auf Daten, die von der mindestens einen der Drehgeschwindigkeit des Stütztellers (20) und dem Abriebmuster von dem Substrat, das sich aus dem Abschleifen ergibt, abgeleitet sind.

13. Das Verfahren nach einem der Ansprüche 9 bis 12, wobei ein Steuern des angewendeten Drucks das Messen eines Schlagsignals mit einem Kraftwandler innerhalb des Werkzeugstapels (24) einschließt, um eine Vibrationsantwort des Werkzeugstapels (24) zu bestimmen.

14. Das Verfahren nach Anspruch 13, wobei sich das Schlagsignal aus einem außeraxialen Massenschwerpunkt von mindestens einem Bestandteil des Werkzeugstapels (24) ergibt.

15. Das Verfahren nach einem der Ansprüche 9 bis 14, wobei das beobachtete Abriebmuster eine Messung einer räumlichen Frequenz des Abriebmusters ist.

16. Das Verfahren nach einem der Ansprüche 9 bis 15, wobei das beobachtete Abriebmuster eine Intensität von Unterschieden in dem Abriebmuster ist.

## Revendications

1. Système de réparation de peinture robotisé (10, 110), comprenant :
un produit abrasif consommable (12) configuré pour abraser un substrat ;
un outil (14) configuré pour entraîner le produit abrasif consommable (12) pour abraser ;
un patin de support (20) configuré pour s'accoupler au produit abrasif consommable (12) ;
un dispositif robotisé (16) configuré pour manipuler l'outil (14) ;
un appareil de régulation de pression pouvant être monté sur le dispositif robotisé (16) et configuré pour appliquer une pression souhaitée au produit abrasif consommable (12) ;
un capteur (122) configuré pour mesurer au moins l'un d'une vitesse de rotation du patin de support (20) ou d'un motif de débris du substrat (225) qui est le résultat d'une abrasion ; et
un dispositif de commande de pression (204, 304) configuré pour commander l'appareil de régulation de pression pour appliquer la pression souhaitée en fonction de l'au moins un de la vitesse de rotation mesurée du patin de support (20) ou du motif de débris mesuré.

2. Système (10) selon la revendication 1, dans lequel le capteur (122) comprend un ou plusieurs d'un tachymètre (22), d'un encodeur, d'une caméra ultra-rapide, d'un accéléromètre, d'un gyroscope, d'un transducteur de force, et d'un transducteur de couple.

3. Système (10) selon la revendication 2, dans lequel le capteur (122) comprend un tachymètre (22) et le patin de support (20) comporte une pluralité d'indications visuelles sur une périphérie du patin de support (20).

4. Système (10) selon la revendication 3, dans lequel les indications visuelles comprennent une pluralité de lignes espacées à incréments prédéterminés autour de la périphérie du patin de support (20).

5. Système (110) selon l'une quelconque des revendications 1 à 4, dans lequel le capteur (122) comprend un transducteur de force et au moins l'un du patin de support (120) et du produit abrasif consommable (112) est agencé avec un centre de masse qui est hors axe.

6. Système (10) selon l'une quelconque des revendications 1 à 5, dans lequel le capteur (122) est configuré pour mesurer la fréquence spatiale du motif de débris.

7. Système (10) selon l'une quelconque des revendications 1 à 6, dans lequel le capteur (122) est configuré pour mesurer des différences d'intensité à l'intérieur du motif de débris.

8. Système (10) selon l'une quelconque des revendications 1 à 7, comprenant en outre un dispositif de commande robotisé configuré pour changer un fonctionnement ou un paramètre se rapportant à la manipulation de la pile d'outil (24) par le dispositif robotisé (16, 116, 216)
en fonction de données dérivées de la vitesse de rotation mesurée du patin de support (20) ou du motif de débris mesuré à partir du substrat qui est le résultat d'une abrasion.

9. Procédé d'abrasion d'un substrat (225) pour effectuer une réparation, comprenant :
la fourniture d'un dispositif robotisé (16, 116, 216) accouplé à une pile d'outil (24) comportant un outil (14), un patin de support (20) et un produit abrasif consommable (12) ;
la manipulation du dispositif robotisé (16, 116, 216) pour déplacer la pile d'outil (24) pour abraser le substrat (225) avec le produit abrasif consommable (12) ; et
la commande d'une pression appliquée au produit abrasif consommable (12) à partir du dispositif robotisé (16, 116, 216) en fonction d'au moins l'un d'une vitesse de rotation du patin de support (20), d'une réponse vibratoire de la pile d'outil (24) et d'un motif de débris observé

10. Procédé d'abrasion selon la revendication 9, dans lequel la vitesse de rotation du patin de support (20) est l'une d'une vitesse de rotation détectée ou d'une vitesse de rotation dérivée.

11. Procédé selon l'une quelconque des revendications 9 à 10, dans lequel la vitesse de rotation du patin de support (20) est mesurée par un tachymètre (22) qui observe une pluralité d'indications visuelles sur une périphérie du patin de support (20).

12. Procédé selon l'une quelconque des revendications 9 à 11, comprenant en outre le changement d'un fonctionnement ou d'un paramètre se rapportant à la manipulation de la pile d'outil (24) par le dispositif robotisé en fonction de données dérivées de l'au moins un de la vitesse de rotation du patin de support (20) et du motif de débris à partir du substrat qui est le résultat d'une abrasion.

13. Procédé selon l'une quelconque des revendications 9 à 12, dans lequel la commande de la pression appliquée comporte la mesure d'un signal de battement avec un transducteur de force à l'intérieur de la pile d'outil (24) pour déterminer une réponse vibratoire de la pile d'outil (24).

14. Procédé selon la revendication 13, dans lequel le signal de battement est le résultat d'un centre de masse hors axe d'au moins un composant de la pile d'outil (24).

15. Procédé selon l'une quelconque des revendications 9 à 14, dans lequel le motif de débris observé est une mesure d'une fréquence spatiale du motif de débris.

16. Procédé selon l'une quelconque des revendications 9 à 15, dans lequel le motif de débris observé est une intensité de différences dans le motif de débris.
